(19) Europäisches Patentamt
European Patent Office
Office européen des brevets

(11) Veröffentlichungsnummer : **0 021 262**
**B1**

(12) # EUROPÄISCHE PATENTSCHRIFT

(45) Veröffentlichungstag der Patentschrift : **16.02.83**

(51) Int. Cl.³ : **C 09 C 3/08**, C 09 C 3/12, C 09 C 1/36

(21) Anmeldenummer : **80103275.6**

(22) Anmeldetag : **12.06.80**

(54) **Anorganische Titan- und Eisenoxidpigmente mit einer verbesserten Glanzgebung und Zerteilbarkeit in Lackbindemitteln und Verfahren zu ihrer Herstellung.**

(30) Priorität : **20.06.79 DE 2924850**

(43) Veröffentlichungstag der Anmeldung : **07.01.81 Patentblatt 81/01**

(45) Bekanntmachung des Hinweises auf die Patenterteilung : **16.02.83 Patentblatt 83/07**

(84) Benannte Vertragsstaaten : **DE FR GB IT**

(56) Entgegenhaltungen :
**FR A 2 038 894**
**US A 3 515 566**

(73) Patentinhaber : **BAYER AG**
**Zentralbereich Patente, Marken und Lizenzen**
**D-5090 Leverkusen 1, Bayerwerk (DE)**

(72) Erfinder : **Köhler, Klaus, Dr.**
**Friedrich-Ebert-Strasse 299**
**D-4150 Krefeld (DE)**
Erfinder : **Woditsch, Peter, Dr.**
**Deswatinesstrasse 83**
**D-4150 Krefeld (DE)**
Erfinder : **Stütgens, Heribert, Dr.**
**Deswatinesstrasse 84**
**D-4150 Krefeld (DE)**
Erfinder : **Bayer, Eckhard, Dr.**
**Grevenbroicher Strasse 47**
**D-4150 Krefeld (DE)**
Erfinder : **Nollen, Klaus, Dr.**
**Rickfelsweg 25**
**D-4150 Krefeld (DE)**
Erfinder : **Sander, Hans, Ing. grad.**
**Deswatinesstrasse 79**
**D-4150 Krefeld (DE)**

EP 0 021 262 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Anorganische Titan- und Eisenoxidpigmente mit einer verbesserten Glanzgebung und Zerteilbarkeit in Lackbindemitteln und Verfahren zur ihrer Herstellung

Gegenstand der vorliegenden Erfindung sind anorganische Titan- und Eisenoxidpigmente, deren Glanzgebung und Zerteilbarkeit in Lackbindemitteln durch eine Behandlung mit organischen Hilfsmitteln vor oder während einer abschließenden Mikronisierung verbessert wurde.

Schleierfreier Hochglanz von Beschichtungen und gute Zerteilbarkeit bei der Einarbeitung in Lackbindemittel sind wichtige Forderungen, die an hochwertige Pigmente gestellt werden. Neben anderen Eingenschaften, wie z. B. guter Wetterstabilität oder Aufhellvermögen, stellen sie ein wesentliches Kriterium der Qualitätsbeurteilung dar. Es hat in der Vergangenheit nicht an Vorschlägen gefehlt, dieses Ziel zu erreichen. Kennzeichnende Maßnahme vieler Patentschriften ist die Organophilierung der an sich organophoben Pigmentoberfläche mit geeigneten Substanzen, wobei organische Hilfsstoffe vor oder während einer den Produktionsprozeß abschließenden Mahlung zugesetzt werden. Üblicherweise wird dabei die Pigmentzerkleinerung in Stift-, Kugel- oder Pendelmühlen vorgenommen. Besonders hochwertige Pigmente werden durch Mikronisierung in Strahlmühlen, z. B. Luftstrahl- oder Dampfstrahlmühlen, erhalten. Als organische Hilfsmittel zur Oberflächenmodifizierung der Pigmente ist eine Vielzahl von Verbindungen bekannt. Neben Polyolen, Alkenoxiden, Phenolen, langkettigen Fettalkoholen oder Fettsäureestern, um nur einige Substanzklassen zu nennen, werden u.a. auch Organosiliciumverbindungen eingesetzt. Ihre Anwendung zielt auf die Hydrophobierung von Pigmenten oder Füllstoffen ab und hat die Verbesserung der Dispergierbarkeit und Einarbeitbarkeit in Kunststoffen zum Gegenstand. So wird z. B. in der OE-A-2 012 017 die Behandlung von $TiO_2$ mit Natrium-methylsilikonat zur Verbesserung der Dispergierbarkeit im Polystyrol beschrieben. Üblich ist auch eine Hydrophobierung mit Polysiloxanen wie z. B. Octamethylcyclotetrasiloxan (GB-A 959 211) zur Verbesserung der Einarbeitbarkeit in Polyamid, oder die Behandlung mit Silanen, wie z. B. Trialkoxysilanen, beschrieben in der GB-A-825 404. Durch derartige Oberflächenbehandlungen ist es jedoch nicht möglich, Pigmente mit hervorragender schleierfreier Glanzgebung in Lackbindemitteln zu erhalten.

Es ist auch bekannt, Pigmente mit Alkanolaminen organisch zu behandeln. So ist z. B. in der US-A-3 345 187 die Verwendung von Trialkanolaminen beschrieben, in der DE-C-2 442 678 die von Diisopropanolamin. Nach dem Verfahren der DE-A-1 792 022 wird Triethanolamin im Verlauf einer sogenannten doppelten Dampfstrahlmahlung mit der Pigmentoberfläche in Kontakt gebracht. Die US-A-2 737 460 hat die Mahlung von Pigmenten mit Trialkanolaminen in Anwesenheit von feinteiligen Füllstoffen, wie z. B. Aerosil, zum Gegenstand. Es ist auch bekannt, Salze von Alkanolaminen mit organischen Säuren, wie z. B. Milchsäure (DE-C-1 271 862) oder Benzoesäuren (US-A-3 172 772) zu verwenden.

Die zitierten Maßnahmen sind entweder kostspielig oder technisch aufwendig, oder die resultierenden Pigmente genügen trotz deutlicher Fortschritte gegenüber organisch unbehandelten Titandioxiden nicht den höchsten Qualitätsansprüchen, die hinsichtlich Glanzgebung und Zerteilbarkeit gestellt werden, insbesondere bei mit $SiO_2$ und $Al_2O_3$ nachbehandelten Pigmenten.

Überraschenderweise wurde nun gefunden, daß sich anorganische Titan- und Eisenoxidpigmente mit verbesserter Glanzgebung und guter Zerteilbarkeit in Lackbindemitteln in einfacher Weise durch eine Behandlung mit organischen Hilfsmitteln vor der abschließenden Mikronisierung herstellen lassen, wenn eine Kombination von Alkanolaminen mit SiOH-gruppenhaltigen siliciumorganischen Verbindungen verwendet wird. Die vorliegende Erfindung betrifft anorganische Pigmente mit einer verbesserten Glanzgebung und Zerteilbarkeit in Lackbindemitteln mit einer Beschichtung aus SiOH-gruppenhaltigen siliciumorganischen Verbindungen mit mehr als 3 Si-Atomen und Alkanolaminen sowie ein Verfahren zu deren Herstellung durch Beschichtung der Pigmente vor oder während der abschließenden Mikronisierung mit den vorgenannten Verbindungen, wobei Weißpigmente auf Basis von $TiO_2$ oder Titanaten oder Eisenoxidfarbpigmente, die gegebenenfalls anorganisch nachbehandelt wurden, bevorzugt geeignet sind. Die neuen Pigmente eignen sich insbesondere zur Pigmentierung von Polymermaterial und wäßrigen Suspensionen.

Die Pigmente werden mit 0,1 % bis 4 %, vorzugsweise 0,3 bis 1 %, der organischen Hilfsmittel in Kontakt gebracht. Es hat sich als vorteilhaft erwiesen, ein Gewichtsverhältnis von SiOH-gruppenhaltigen siliciumorganischen Verbindungen zum Alkanolamin von 1 : 1 bis 1 : 10, vorzugsweise : 1 : 2 bis 1 : 5, zu wählen. Die SiOH-gruppenhaltigen siliciumorganischen Verbindungen sind durch ein OH-Si-Verhältnis von 1 : 1 bis 1 : 20, vorzugsweise von 1 : 2 bis 1 : 10, gekennzeichnet. Beispiele sind lineare und verzweigte siliciumorganische Verbindungen der Formel

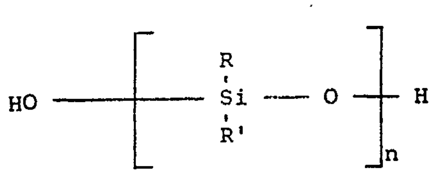

mit $n > 3$, wobei der Rest R′ gleich oder verschieden von R ist ; R kann ein Alkyl- und/oder Cycloalkyl- und/oder Aryl- und/oder Alkenyl- und/oder seinerseits eine

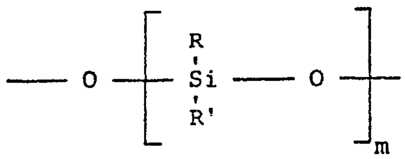

-Gruppierung mit m > 1

sein.

Geeignet sind dabei definierte Fraktionen der Hydrolysate von z. B. Dimethyldichlorsilan ; Dimethyldichlorsilan und Methyltrichlorsilan ; Dimethyldichlorsilan und Siliciumtetrachlorid ; Vinylmethyldichlorsilan ; Vinylmethyldichlorsilan und Dimethyldichlorsilan, Cyclohexylmethyldichlorsilan und Dimethyldichlorsilan ; usw. Auch Kondensationsprodukte des Diphenylsilandiols sind geeignet.

Besonders geeignet sind z. B. lineare Polymethylsiloxane mit SiOH-Endstoppung mit einem mittleren Molekulargewicht von 490, wobei die Viskosität 27 cP beträgt sowie lineare Polyvinylmethylsiloxane mit SiOH-End-stoppung, einem [meSiviO]-Anteil von 5 %, einem [SiOH]-Anteil von 18,2 % und einer Viskosität von 25.5 cP. Ebenso geeignet sind auch verzweigte Polymethylsiloxane mit SiOH-Endstoppung mit einem mittleren Molekulargewicht von 545, wobei die Viskosität 110 cP beträgt sowie verzweigte Polyvinylmethylsiloxane mit SiOH-Endstoppung, einem [meSiViO]-Anteil an 5 %, einem [SiOH]-Anteil von 15,2 % und einer Viskosität von 96 cP.

Allen diesen genannten Verbindungen ist ein bestimmtes Verhältnis von OH-Gruppen zu Si-Atomen gemeinsam, das nach dem erfindungsgemäßen Verfahren im Bereich von 1: 1 bis 1: 20 liegen soll, um optimale Pigmenteigenschaften zu erhalten. Als Alkanolamine können Trialkanolamine, Dialkanolamine und/oder Monoalkanolamine eingesetzt werden. Besonders geeignet sind Triethanolamin, Triisopropanolamin, Diisopropanolamin, 2-Amino-2-methyl-1-propanol, 2-Amino-2-hydroxymethyl-1,3-propandiol, 2-Dimethylaminoethanol, 2-Ethylaminoethanol usw. Die organischen Hilfsstoffe werden mit dem Pigment in an sich bekannter Weise vor oder während einer abschließenden Mahlung in Kontakt gebracht. Es ist gleichgültig, ob sie den bei der Pigmentherstellung anfallenden feuchten Filterkuchen, Pasten oder Aufschlämmungen vor der Trocknung zugemischt werden, oder ob sie unmittelbar vor der abschließenden Mahlung im getrockneten Gut in geeigneter Weise, beispielsweise durch Aufsprühen, zugegeben oder beispielsweise im Falle einer Dampfstrahlmahlung dem Dampf unmittelbar bei der Einspeisung in die Strahlmühle zugesetzt werden. Die Wirksamkeit der erfindungsgemäß einzusetzenden Verbindungen ist unabhängig von der Reihenfolge der Zugabe. Gleichgültig ob Gemische von Alkanolaminen mit siliciumorganischen Verbindungen oder zuerst Alkanolamin und anschließend siliciumorganische Verbindungen oder umgekehrt zugegeben werden, sind Pigmente zugänglich, die nach der Mikronisierung im Glanz, Schleier oder der Körnigkeit erheblich verbessert sind gegenüber den nur mit Alkanolaminen oder nur mit siliciumorganischen Verbindungen beaufschlagten Produkten.

Es liegt eindeutig ein synergistischer Effekt vor, wie auch aus Tabelle 1 zu ersehen ist.

Dem Verfahren sind alle anorganischen Weiß- und Buntpigmente zugänglich. Besonders vorteilhafte Ergebnisse werden mit Weißpigmenten auf Basis von $TiO_2$ oder Titanaten oder mit Eisenoxiden erzielt. Die Pigmente können gegebenenfalls einer anorganischen Nachbehandlung unterworfen worden sein. Man erhält nach dem erfindungsgemäßen Verfahren Pigmente mit hervorragender Glanzgebung und guter Zerteilbarkeit.

Entsprechend der Erfindung können sowohl nach dem Sulfatverfahren als auch nach dem $TiCl_4$-Verbrennungsverfahren hergestellte $TiO_2$-Pigmente der Rutil- oder Anatas-Form behandelt werden. Die Oberflächenbehandlung von anorganisch behandelten $TiO_2$-Pigmenten mit den erfindungsgemäßen organischen Hilfsstoffen sei im folgenden als Beispiel ausführlich besprochen.

Nach mehreren Vorstufen fällt z. B. ein Ofenklinker an, welcher gemahlen und klassiert wird. Das Feingut wird einer anorganischen Nachbehandlung, die im Auffällen von z. B. $Al(OH)_3$, $SiO_2$, $TiO_2$ bestehen kann, unterzogen. Dies kann in einer Suspension nach verschiedenen Verfahrensvarianten erfolgen. Dabei wird der anorganisch nachbehandelte Pigmentschlamm über ein Drehfilter entwässert und dabei gewaschen. Das Filtergut dieses ersten Drehfilters kann wieder mit Wasser angemaischt und einem zweiten Drehfilter zugeführt werden. Das Drehfiltergut II wird nochmals gewaschen und dann getrocknet, wobei als Trocknungsaggregate Bandtrockner oder Sprühtrocknungseinrichtungen dienen.

Nach der Trocknung erfolgt die Zerkleinerung der Pigmente durch Mahlung entweder in einer Strahlmühle, z. B. einer Luftstrahlmühle oder einer Dampfstrahlmühle oder in verdichtenden Mahlaggregaten wie Raymond-, Kugel- oder Stiftmühlen. Die erfindungsgemäßen organischen Hilfsmittel können mit dem Pigment an verschiedenen Punkten vor oder während der Mikronisierung in Kontakt gebracht werden. Beispielsweise können sie dem Drehfiltergut II nach der Waschung und vor der Trocknung zugemischt werden. Sie können auch dem getrockneten Gut unmittelbar vor der Mikronisierung, z. B. durch Besprühen, zugesetzt werden. Eine andere Behandlungsart besteht in der Zugabe der erfindungsgemäß einzusetzenden Verbindungen zu dem Dampf oder der Luft bei der Einspeisung in die Strahlmühle. Vorteilhaft kann die Dosierung der erfindungsgemäßen organischen Hilfsstoffe als Mischung erfolgen, da dadurch ein konstant angestrebtes Verhältnis von Alkanolamin und siliciumorganischen Verbindungen erhalten bleibt.

Eine weitere Verfahrensvariante besteht darin, die SiOH-gruppenhaltige siliciumorganische Verbindung dem Drehfiltergut nach der Waschung und vor der Trocknung zuzumischen und das Alkanolamin auf das trockene Gut vor der Mahlung zu sprühen oder mit dem Dampf oder der Luft mit dem Pigment in Kontakt zu bringen.

Das bedeutet, daß es möglich ist, die Kombination der organischen Hilfsstoffe getrennt an verschiedenen Punkten des Herstellungsprozesses dem Pigment zuzugeben.

Für die Prüfung der Glanzgebung und der Zerteilbarkeit in Lackbindemitteln wird das Pigment in einem Lackbindemittel durch einen Dissolver dispergiert. Dies erfolgt in einem hochviskosen Bindemittel-Lösungsgemisch von 60 % Alkyldharz (Ricinen-modifiziertes Alkydharz, Öllänge 35 ; Handelsprodukt Alkydal R 35 der BAYER-AG) in Xylol unter folgenden Bedingungen :

| | |
|---|---|
| Mahlgut-Pigmentvolumenkonzentration (PVK) : | 37,6 % |
| Durchmesser der Dissolverscheibe : | 3,5 cm = D |
| Behälterdurchmesser : | 5,5 cm = 1,57 D |
| Dissolverscheibenabstand vom Boden : | 1,75 cm = 0,5 D |
| Füllhöhe des Mahlguts : | 3,5 cm = D |
| Randgeschwindigkeit der Dissolverscheibe : | 11 m/s |
| Dispergierzeit : | 5 Minuten |

Nach 5 Minuten Dispergierzeit werden Proben entnommen, mit dem Alkydharz und einem Melamin-Harz (Maprenal MF 800, Handelsprodukt der Hoechst AG) auf eine PVK von 15 % aufgelackt, so daß das Verhältnis von Alkydharz zu Melamin-Harz 77 : 23 beträgt. Die Dispergierfeinheit wird in üblicher Weise mit einem Grindometer bestimmt (DIN 53 203). Die hergestellten Lacke werden dann mit 120 μm Naßfilmdicke auf Glasplatten appliziert und 30 Minuten bei 120 °C gehärtet. Die Glanzmessung erfolgt mit einem Goniophotometer unter einem Winkel von 25°. Dabei stellen die Peakhöhe im Reflexionsmaximum ein Maß für die erhaltenen Glanzwerte, die Höhe der Streukurve 1° neben dem Reflexionsmaximum ein Maß für die Glanzschleierwerte dar.

Ein hochglänzender Lack zeichnet sich durch hohe Glanzwerte und niedrige Glanzschleierwerte aus.

Nachfolgend wird die Herstellung der erfindungsgemäßen Pigmente beispielhaft beschrieben :

### Beispiel 1

Ein nach dem Sulfatverfahren hergestelltes $TiO_2$-Pigment mit Rutilstruktur wurde mit 3,8 % $SiO_2$ und 4 % $Al_2O_3$ anorganisch nachbehandelt und nach den üblichen Wasch- und Filtrationsschritten getrocknet. Das Pigment wird mit 0,1 Gew.-% (bezogen auf trockenes Pigment) eines $\alpha,\omega$-Polysiloxandiolgemisches mit einem mittleren Molekulargewicht von 490, wobei die Viskosität 27 cP beträgt, und 0,3 % Triethanolamin besprüht und in einer mit überhitztem Wasserdampf betriebenen Strahlmühle mikronisiert. Die Dispergierbarkeit und die Glanz- und Glanzschleierwerte können der Tabelle 1 entnommen werden.

### Vergleichsbeispiel A

Durch das Vergleichsbeispiel A wird gezeigt, daß die alleinige Anwendung von Triethanolamin ein qualitativ wesentlich schlechteres Pigment liefert.

Das Rutilpigment, wie in Beispiel 1 beschrieben, wird nach dem Trocknen mit 0,4 % Triethanolamin besprüht und in der Strahlmühle analog Beispiel 1 mikronisiert. Die Dispergiereigenschaften sind aus Tabelle 1 ersichtlich.

### Vergleichsbeispiel B

Durch das Vergleichsbeispiel B wird gezeigt, daß die alleinige Anwendung der SiOH-gruppenhaltigen Si-organischen Verbindung ein qualitativ weniger gutes Pigment liefert. Das Rutilpigment, wie in Beispiel 1 beschrieben, wird nach dem Trocknen mit 0,4 % eines $\alpha,\omega$-Polysiloxandiolgemisches mit einem mittleren Molekulargewicht von 490 und einer Viskosität von 27 cP besprüht und mikronisiert ; s. Tabelle 1.

### Beispiel 2

Das Rutilpigment des Beispiel 1 wird nach dem Trocknen mit 0,17 % eines $\alpha,\omega$-Polysiloxandiolgemisches mit einem mittleren Molekulargewicht von 490, wobei es eine Viskosität von 27 cP aufweist, und mit 0,53 % Triethanolamin besprüht und dampfstrahlgemahlen ; siehe Tabelle 1.

### Beispiel 3

Das Rutilpigment des Beispiel 1 wird nach dem Trocknen mit 0,12 % eines $\alpha,\omega$-Polysiloxandiolge-

misches mit einem mittlerem Molekulargewicht von 490, wobei die Viskosität 27 cP beträgt, und 0,58 % Triethanolamin besprüht und dampfstrahlgemahlen ; siehe Tabelle 1.

Beispiel 4

Dem gewaschenen Filterkuchen des Rutilpigments des Beispiels 1 wird vor dem Trocknen 0,12 Gew.-% (bezogen auf trockenes Pigment) einer verzweigten SiOH-gruppenhaltigen siliciumorganischen Verbindung der durchschnittlichen Bruttoformel $TD_{6,56}$ mit 14 % SiOH-Gruppenanteil zugemischt. Nach dem Trocknen wird mit 0,48 % Triethanolamin besprüht und analog Beispiel mikronisiert ; siehe Tabelle 1.

Beispiel 5

Das Rutilpigment des Beispiel 1 wird nach dem Trocknen mit einer Mischung enthaltens 0,12 Gew.-% (bezogen auf trockenes Pigment) eines Polysiloxandiolgemisches mit einem mittleren Molekulargewicht von 490, wobei die Viskosität 27 cP beträgt, und 0,48 Gew.-% (bezogen auf trockenes Pigment) 2-Amino-2-methyl-1-propanol besprüht und analog Beispiel 1 dampfstrahlgemahlen ; s. Tabelle 1.

Beispiel 6

Das Rutilpigment des Beispiel 1 wird nicht organisch nachbehandelt.

Tabelle 1

| gemäß Beispiel | Organische Behandlung | Glanz (%) | Schleier (%) | Grindometerwert (μ) | Hegman-Wert |
|---|---|---|---|---|---|
| 1 | 0,1 % Si-org. Verb. u.<br>0,3 % Triäthanolamin | 87 | 26 | 16 | 6,7 |
| Vergl. Beisp. A | 0,4 % Triäthanolamin | 77 | 37 | 20 | 6,4 |
| Beisp. B | 0,4 % Si-org. Verbindung | 70 | 40 | 16 | 6,7 |
| 2 | 0,17 % Si-org. Verb. u.<br>0,53 % Triäthanolamin | 85 | 24 | 16 | 6,7 |
| 3 | 0,12 % Si-org. Verb. u.<br>0,58 % Triäthanolamin | 87 | 24 | 16 | 6,7 |
| 4 | 0,12 % verzweigte Si-org. Verb. und<br>0,48 % Triäthanolamin | 88 | 23 | 14 | 6,9 |
| 5 | 0,12 % Si-org. Verb. u.<br>0,48 % 2-Amino-2-methyl-1-propanol | 86 | 25 | 14 | 6,9 |
| 6 | ohne | 49 | > 100 | 38 | 40 |

**Ansprüche**

1. Anorganische Titan- und Eisenoxidpigmente mit einer verbesserten Glanzgebung und Zerteilbarkeit in Lackbindemitteln mit einer Beschichtung aus 0,1 % bis 3 %, vorzugsweise 0,3 % bis 1 %, bezogen auf das Gewicht des Pigments, an SiOH-gruppenhaltigen siliciumorganischen Verbindungen mit mehr als 3 Si-Atomen und Alkanolaminen, wobei das Gewichtsverhältnis der SiOH-gruppenhaltigen siliciumorganischen Verbindungen zu den Alkanolaminen im Bereich 1 : 1 bis 1 : 10, vorzugsweise 1 : 2 bis 1 : 5, liegt.

2. Anorganische Titan- und Eisenoxidpigmente gemäß Anspruch 1, dadurch gekennzeichnet, daß das Pigment ein Weißpigment auf Basis von $TiO_2$ oder Titanaten oder ein Eisenoxidfarbpigment ist und gegebenenfalls anorganisch nachbehandelt wurde.

3. Anorganische Titan- und Eisenoxidpigmente gemäß einem der Ansprüche 1 oder 2, dadurch gekennzeichnet, daß die Siliciumorganischen Verbindungen lineare und/oder verzweigte Verbindungen der Formel

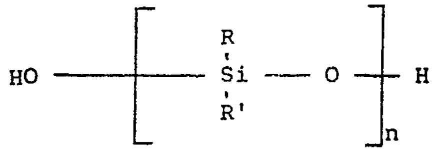

mit n > 3, wobei die Reste R und R' gleiche oder verschiedene Alkyl- und/oder Cycloalkyl- und/oder Aryl- und/oder Alkenyl- und/oder

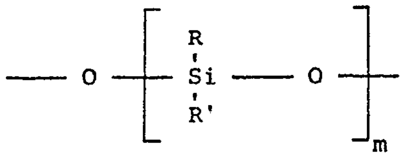 H-Gruppierungen sein können,

wobei m > 1 ist, und die siliciumorganischen Verbindungen ein OH : Si-Verhältnis von 1 : 1 bis 1 : 20, vorzugsweise 1 : 2 bis 1 : 10, aufweisen.

4. Anorganische Titan- und Eisenoxidpigmente gemäß einem der Ansprüche 1 bis 3, dadurch gekennzeichnet, daß die siliciumorganischen Verbindungen lineare und/oder verzweigte Verbindungen der Formel

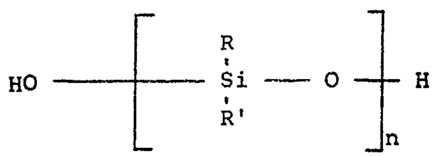

mit n > 3, wobei die Reste R und R' gleiche oder verschiedene Methyl- und/oder Ethyl- und/oder Phenyl- und/oder

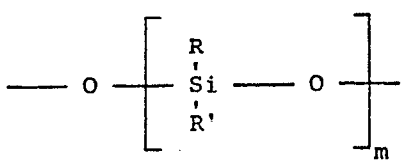 H-Gruppierungen sein können,

wobei m > 1 ist, und die SiOH-gruppenhaltigen siliciumorganischen Verbindungen ein OH : Si-Verhältnis von 1 : 1 bis 1 : 20, vorzugsweise 1 : 2 bis 1 : 10, aufweisen.

5. Anorganische Titan- und Eisenoxidpigmente gemäß einem der Ansprüche 1 bis 4, dadurch gekennzeichnet, daß als Alkanolamine Triethanolamin, Diethanolamin, Triisopropanolamin, Diisopropanolamin, 2-Amino-2-methyl-propanol oder Gemische dieser Verbindungen verwendet werden.

6. Verfahren zur Herstellung anorganischer Titan- und Eisenoxidpigmente gemäß einem der Ansprüche 1 bis 5, dadurch gekennzeichnet, daß man eine Kombination von SiOH-gruppenhaltigen siliciumorganischen Verbindungen mit mehr als 3 Si-Atomen und Alkanolaminen dem Pigment vor oder während der abschließenden Mikronisierung zugibt.

**Claims**

1. Inorganic titanium oxide and iron oxide pigments having improved gloss and distribution in lacquer binders having a coating of 0.1 % to 3 %, preferably 0.3 % to 1 %, based on the weight of the pigment, of SiOH-group-containing organosilicon compounds with more than 3 Si atoms and alkanolamines, the ratio by weight of the SiOH-group-containing organosilicon compounds to the alkanolamines being in the range of 1 : 1 to 1 : 10, preferably 1 : 2 to 1 : 5.

2. Inorganic titanium oxide and iron oxide pigments according to Claim 1, characterised in that the pigment is a white pigment based on $TiO_2$ or titanates or an iron oxide coloured pigment and has optionally been inorganically aftertreated.

3. Inorganic titanium oxide and iron oxide pigments according to one of Claims 1 or 2, characterised in that the organosilicon compounds are linear and/or branched compounds of the formula

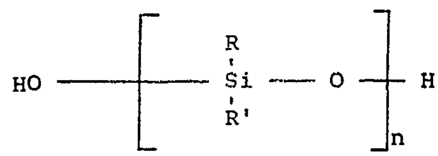

wherein $n > 3$ and the radicals R and R′ can be identical or different alkyl and/or cycloalkyl and/or aryl and/or alkenyl and/or

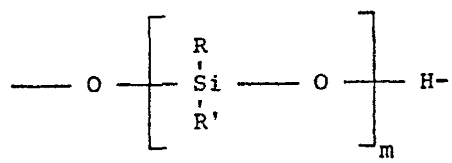 groupings,

wherein $m > 1$, and the organosilicon compounds have an OH : Si ratio of 1 : 1 to 1 : 20, preferably 1 : 2 to 1 : 10.

4. Inorganic titanium oxide and iron oxide pigments according to one of Claims 1 to 3, characterised in that the organosilicon compounds are linear and/or branched compounds of the formula

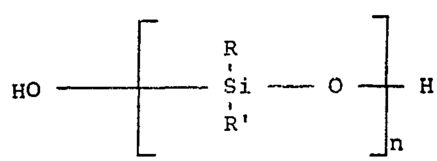

wherein $n > 3$ and the radicals R and R′ can be identical or different methyl and/or ethyl and/or phenyl and/or

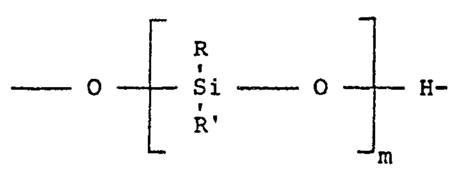 groupings,

wherein $m > 1$, and the SiOH-group-containing organosilicon compounds have an OH : Si ratio of 1 : 1 to 1 : 20, preferably 1 : 2 to 1 : 10.

5. Inorganic titanium oxide and iron oxide pigments according to one of Claims 1 to 4, characterised in that the alkanolamines used are triethanolamine, diethanolamine, triisopropanolamine, diisopropanolamine, 2-amino-2-methyl-propanol or mixtures of these compounds.

6. Process for the preparation of inorganic titanium oxide and iron oxide pigments according to one of Claims 1 to 5, characterised in that a combination of SiOH-group-containing organosilicon compounds with more than 3 Si atoms and alkanolamines is added to the pigment before or during the final micronisation.

**Revendications**

1. Pigments inorganiques d'oxyde de titane et d'oxyde de fer à brillance et dispersibilité dans des liants pour vernis améliorées, portant un revêtement de 0,1 à 3 %, de préférence 0,3 à 1 %, par rapport au poids de pigment, de composés organosiliciques porteurs de groupes SiOH ayant plus de 3 atomes de Si

et d'alcanolamines, le rapport en poids des composés organosiliciques porteurs de groupes SiOH aux alcanolamines étant situé dans la plage de 1 : 1 à 1 : 10, de préférence de 1 : 2 à 1 : 5.

2. Pigments inorganiques d'oxyde de titane et d'oxyde de fer suivant la revendication 1, caractérisés en ce que le pigment est un pigment blanc à base de $TiO_2$ ou de titanates ou un pigment coloré d'oxyde de fer et a été éventuellement exposé à un traitement inorganique complémentaire.

3. Pigments inorganiques d'oxyde de titane et d'oxyde de fer suivant l'une des revendications 1 ou 2, caractérisés en ce que les composés organosiliciques sont des composés linéaires et/ou ramifiés de formule :

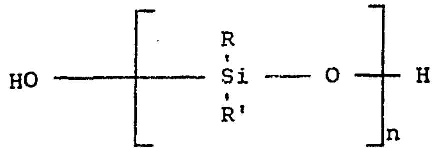

avec n > 3, les restes R et R' pouvant être des groupements alkyle et/ou cycloalkyle et/ou aryle et/ou alcényle et/ou

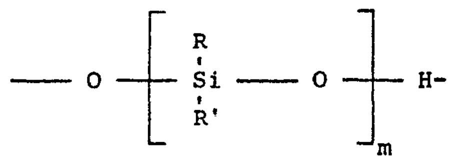

égaux ou différents, m étant supérieur à 1, et les composés organosiliciques présentant un rapport OH : Si de 1 : 1 à 1 : 20, de préférence de 1 : 2 à 1 : 10.

4. Pigments inorganiques d'oxyde de titane et d'oxyde de fer suivant l'une des revendications 1 à 3, caractérisés en ce que les composés organosiliciques sont des composés linéaires et/ou ramifiés de formule :

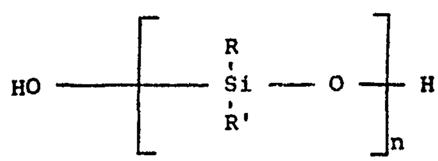

avec n > 3, les restes R et R' pouvant être des groupements méthyle et/ou éthyle et/ou phényle et/ou

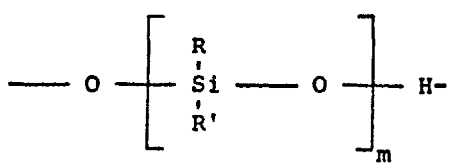

égaux ou différents, m étant supérieur à 1 et les composés organosiliciques porteurs de groupes SiOH présentant un rapport OH : Si de 1 : 1 à 1 : 20, de préférence de 1 : 2 à 1:10.

5. Pigments inorganiques d'oxyde de titane et d'oxyde de fer suivant l'une des revendications 1 à 4, caractérisés en ce qu'on utilise comme alcanolamines la triéthanolamine, la diéthanolamine, la triisopropanolamine, la diisopropanolamine, le 2-amino-2-méthylpropanol ou des mélanges de ces composés.

6. Procédé de production de pigments inorganiques d'oxyde de titane et d'oxyde de fer suivant l'une des revendications 1 à 5, caractérisé en ce qu'on ajoute une association de composés organosiliciques porteurs de groupes SiOH ayant plus de 3 atomes de Si et d'alcanolamines au pigment avant ou pendant la micronisation finale.